# EUROPÄISCHE PATENTSCHRIFT

(11) **EP 3 088 162 B1**
(45) Veröffentlichungstag und Bekanntmachung des Hinweises auf die Patenterteilung: **23.11.2022**
(21) Anmeldenummer: 16167982.4
(22) Anmeldetag: 02.05.2016
(51) Int. Cl.: B29C 49/68, B29C 49/64, H05B 6/74, H05B 6/80, B29C 49/06

(54) **VORRICHTUNG UND VERFAHREN ZUM ERWÄRMEN VON KUNSTSTOFFVORFORMLINGEN MITTELS MIKROWELLEN MIT ANPASSBAREM BODENREFLEKTOR**
METHOD AND DEVICE FOR HEATING PLASTIC PRE-FORMS USING MICROWAVES, WITH ADJUSTABLE GROUND REFLECTOR
DISPOSITIF ET PROCEDE DESTINES AU CHAUFFAGE D'EBAUCHES EN PLASTIQUE A L'AIDE DE MICRO-ONDES AYANT DES REFLECTEURS DE SOL POUVANT ETRE ADAPTES

(30) Priorität: 30.04.2015 DE 102015106744
(43) Veröffentlichungstag der Anmeldung: 02.11.2016
(73) Patentinhaber: Krones AG, 93073 Neutraubling (DE)
(72) Erfinder: Kursawe, Andreas, 93073 Neutraubling (DE); Fuchs, Florian, 93073 Neutraubling (DE); Zimmerer, Johann, 93073 Neutraubling (DE); Senn, Konrad, 93073 Neutraubling (DE); Kammerl, Martin, 93073 Neutraubling (DE)
(74) Vertreter: Bittner, Bernhard

(56) Entgegenhaltungen:
- DE-A1-102007 022 386
- DE-A1-102008 060 572
- DE-A1-102011 052 899
- DE-A1-102012 107 811
- JP-A- S63 307 928

## Beschreibung

Die vorliegende Erfindung bezieht sich auf eine Vorrichtung und ein Verfahren zum Erwärmen von Kunststoffvorformlingen. Derartige Verfahren und Vorrichtungen sind aus dem Stand der Technik bekannt. Im Bereich der getränkeherstellenden Industrie ist es bekannt, dass zunächst sogenannte Kunststoffvorformlinge erwärmt werden und anschließend die so erwärmten Kunststoffvorformlinge zu Kunststoffbehältnissen expandiert, insbesondere aufgeblasen werden. Bei aus dem Stand der Technik bekannten Vorrichtungen werden die Kunststoffvorformlinge durch einen Ofen transportiert und dort mittels Infrarotstrahlung erwärmt. In jüngerer Zeit ist man jedoch auch teilweise dazu übergegangen, zur Erwärmung von Kunststoffvorformlingen nicht infrarotes Licht sondern Mikrowellen einzusetzen.

Zur Erwärmung von Kunststoffvorformlingen mittels Mikrowellen werden die Kunststoffvorformlinge in einem Resonator oder Applikator eingeführt. Dabei ist es aus dem Stand der Technik der Anmelderin bekannt, beispielsweise zur Erwärmung der Kuppe der Kunststoffvorformlings einen Bodenreflektor in den Resonator oder Applikator einzusetzen, um das Mikrowellenfeld an die Geometrie dieser Kuppe anzupassen.

Die Form dieses Reflektorelements beeinflusst das elektrische Feld im Applikator. Durch die Änderung des Feldes wird auch die Absorption der Mikrowellenstrahlung durch den Kunststoffvorformling und damit auch die Lage und Form des aufgebrachten Temperaturprofils an der Kuppe bestimmt bzw. beeinflusst.

Das Dokument DE102007022386 offenbart eine Vorrichtung zum Erwärmen von Kunststoffvorformlingen gemäß dem Oberbegriff des Anspruchs 1.

Der vorliegenden Erfindung liegt die Aufgabe zu Grunde, die Genauigkeit für derartige Erwärmungsprozesse zu erhöhen. Daneben soll auch die Steuerbarkeit und/oder die Kontrollierbarkeit dieser Erwärmungsprozesse erhöht werden. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist wenigstens eine Mikrowellenerzeugungseinrichtung auf, welche Mikrowellen erzeugt sowie eine Resonatoreinrichtung, welche einen Aufnahmeraum ausbildet, in welchen die Kunststoffvorformlinge einführbar sind, um in der Resonatoreinrichtung zur ihrer Erwärmung mit dem Mikrowellen beaufschlagt zu werden. Weiterhin weist die Vorrichtung wenigstens ein wenigstens teilweise in dem Aufnahmeraum angeordnetes Reflektorelement auf, welches geeignet und dazu bestimmt ist, Mikrowellen z.B. in Richtung eines Bodenbereichs der Kunststoffvorformlinge zu leiten und/oder zu reflektieren.

Erfindungsgemäß ist das Reflektorelement gegenüber dem Aufnahmeraum beweglich und die Vorrichtung weist eine Antriebseinrichtung auf, um das Reflektorelement gegenüber dem Aufnahmeraum zu bewegen. Bevorzugt ist das Reflektorelement automatisch bewegbar

Es wird daher im Gegensatz zum Stand der Technik vorgeschlagen, dass nicht nur das besagte Reflektorelement vorhanden ist, sondern dass dieses auch verstellbar angeordnet ist und insbesondere mittels eines Antriebs verstellbar angeordnet ist. Durch einen derartigen Antrieb kann in sehr präziser Weise der Erwärmungsprozess der Kunststoffvorformlinge eingestellt werden. So wäre es beispielsweise möglich, dass die Position des Reflektorelements durch den eigenen Antrieb erfolgt. Dabei wäre eine mechanische Kopplung an die Position des Kunststoffvorformlings denkbar, es wäre jedoch auch möglich und bevorzugt, dass das Bodenreflektorelement auch unabhängig von der Bewegung des Kunststoffvorformlings steuerbar ist.

Vorteilhaft ist wenigstens eine Mikrowellenerzeugungseinrichtung aus einer Gruppe von Mikrowellenerzeugungseinrichtungen ausgewählt, welche Magnetrons, Klystrons oder Festkörperquellen enthält. Besonders vorteilhaft handelt es sich bei der Mikrowellenerzeugungseinrichtung um ein so genanntes Magnetron. Vorteilhaft weist die Vorrichtung auch eine Leitungseinrichtung auf, welche die von der Mikrowellenerzeugungseinrichtung erzeugten Mikrowellen zu der Resonatoreinrichtung bzw. zu den Applikator leitet. Hierbei kann es sich insbesondere aber nicht ausschließlich um einen Hohlleiter handeln.

Vorteilhaft ist die Resonatoreinrichtung an einem beweglichen Träger angeordnet. Vorteilhaft handelt es bei dem beweglichen Träger um einen drehbaren Träger. Bei einer weiteren vorteilhaften Ausführungsform weist die Vorrichtung eine Vielzahl von derartigen Resonatoreinrichtungen auf, die jeweils an einem gemeinsamen Träger angeordnet sind.

Bevorzugt weist dabei jede dieser Resonatoreinrichtungen ein Reflektorelement der oben beschriebenen Art auf. Bevorzugt sind die Bewegungen dieser Reflektorelemente gegenüber ihren jeweiligen Resonatoreinrichtungen bzw. den Aufnahmeräumen bewegbar. Bevorzugt sind dabei jeder einzelnen Resonatoreinrichtung auch Antriebseinrichtungen zum Bewegen der Reflektorelemente zugeordnet. Bevorzugt sind dabei diese Antriebseinrichtungen unabhängig voneinander steuerbar so dass auch die Relativbewegungen der einzelnen Reflektorelemente unabhängig voneinander steuerbar sind. Auf diese Weise ist eine individuelle Anpassung der einzelnen Resonatoreinrichtungen möglich.

Bei einer weiteren vorteilhaften Ausführungsform weist die Vorrichtung Bewegungseinrichtungen auf, um den Kunststoffvorformling in die Resonatoreinrichtung einzuführen. Insbesondere ist dabei die Bewegungseinrichtung dazu geeignet und bestimmt den Kunststoffvorformling entlang seiner Längsrichtung in die Resonatoreinrichtung einzuführen. Vorteilhaft weist dabei diese Bewegungseinrichtung einen elektromotorischen Antrieb und insbesondere einen Linearmotor auf.

Bevorzugt weist die Antriebseinrichtung zum Bewegen der Reflektorelemente einen Antrieb auf, der aus einer Gruppe von Antrieben ausgewählt ist, welche elektrische, insbesondere elektromotorische Antriebe, pneumatische Antriebe, hydraulische Antriebe oder magnetische Antriebe enthält. Besonders bevorzugt weist der Antrieb einen Linearmotor auf.

Bei einer weiteren vorteilhaften Ausführungsform weist die Vorrichtung auch eine Erfassungseinrichtung auf, welche einen für eine Relativposition des Reflektorelements gegenüber dem Aufnahmeraum charakteristischen Wert erfasst. Dabei könnte es sich um eine optische Erfassungseinrichtung handeln, bevorzugt kann jedoch dieser Wert unmittelbar von einer Steuerung der Antriebseinrichtung für das Reflektorelement ermittelt werden, etwa aus einer Steuerung eines Servomotors. Bevorzugt kann auch dieser Wert bei der Steuerung der Position des Reflektorelements berücksichtigt werden.

Bevorzugt ist die Bewegung des Reflektorelements auch in Abhängigkeit von der Bewegung des Kunststoffvorformlings in dessen Längsrichtung steuerbar. Dies bedeutet, dass während eines Erwärmungsprozesses eines bestimmten Kunststoffvorformlings durch eine Bewegung des Reflektorelements bezüglich dem Aufnahmeraum auch zusätzlich der Abstand zwischen dem Kunststoffvorformling und dem Reflektorelement verändert werden kann. So wäre es beispielsweise denkbar, dass der Kunststoffvorformling mit einer gewissen Geschwindigkeit v1 in den Resonator geschoben, beispielsweise vertikal nach unten bewegt wird und in dem gleichen Zeitraum das Reflektorelement mit einer anderen Geschwindigkeit v2 vertikal nach unten bewegt wird und sich auf diese Weise während er Erwärmung des Kunststoffvorformlings der Abstand zwischen dem Kunststoffvorformling und dem Reflektorelement mit der Geschwindigkeit v2 - v1 ändert.

Bevorzugt ist daher die Bewegung des Reflektorelements gegenüber dem Aufnahmeraum unabhängig von einer Bewegung des Kunststoffvorformlings gegenüber dem Aufnahmeraum steuerbar. Dabei wäre es jedoch denkbar und bevorzugt, dass eine Steuerungseinrichtung für diese Bewegungen in jedem Fall eine Kollision zwischen dem Kunststoffvorformling und dem Reflektorelement verhindert.

Bei einer weiteren vorteilhaften Ausführungsform kann insbesondere durch eine Positionsänderung des Reflektorelements auch eine Verteilung der Mikrowellen auf den Kunststoffvorformling angepasst werden. Bevorzugt kann auch eine Temperaturverteilung an den einzelnen Abschnitten des Kunststoffvorformlings geändert werden.

Bei einer weiteren vorteilhaften Ausführungsform weist die Vorrichtung noch eine zusätzliche Erwärmungseinrichtung in Form einer Infrarot - Erwärmungseinrichtung auf. So kann beispielsweise eine derartige Infrarot - Erwärmungseinrichtung der Mikrowellenerwärmungseinrichtung vorgeschaltet sein. Auf diese Weise kann die Effizienz der Vorrichtung erhöht werden, da die Erwärmung mittels Mikrowellen bei bereits vorgewärmten Kunststoffvorformlingen effizienter als bei Kunststoffvorformlingen auf Raumtemperaturniveau ist.

Bei einer weiteren vorteilhaften Ausführungsform ist der Erwärmungseinrichtung eine Vorrichtung zum Umformen von Kunststoffvorformlingen zu Kunststoffbehältnissen nachgeordnet und insbesondere eine Blasformmaschine, besonders bevorzugt eine Streckblasmaschine.

Der Aufnahmeraum zum Aufnehmen der Kunststoffvorformlinge zu deren Erwärmung kann nach unten hin abgeschlossen sein, es wäre doch auch möglich, dass der Aufnahmeraum an zwei gegenüberliegenden Seiten geöffnet ist. Vorteilhaft umgibt jedoch einen Umfangswandung des Aufnahmeraums den Kunststoffvorformling vollständig in dessen Umfangsrichtung.

Bei einer weiteren vorteilhaften Ausführungsform ist ein Abstand zwischen dem Kunststoffvorformling und dem Reflektorelement in einer Längsrichtung des Kunststoffvorformlings veränderbar. Die bedeutet, dass das Reflektorelement insbesondere näher an einen Kuppenbereich des Kunststoffvorformlings herangeführt oder von diesem weiter entfernt werden kann.

Vorteilhaft ist das Reflektorelement zumindest während der Erwärmung des Kunststoffvorformlings unterhalb eines geschlossenen Endes des Kunststoffvorformlings d. h. unterhalb einer Bodenkuppe des Kunststoffvorformlings angeordnet. Dabei ist es bevorzugt möglich, dass das Reflektorelement zentriert unterhalb des Kunststoffvorformlings angeordnet ist. Neben der hier beschriebenen Bewegung des Reflektorelements in der Längsrichtung des Kunststoffvorformlings wären jedoch alternativ oder zusätzlich auch andere Bewegungen denkbar, wie beispielsweise eine Bewegung senkrecht zu der Längsrichtung des Kunststoffvorformlings oder auch ein Verkippen oder Verdrehen des Reflektorelements.

Bei einer weiteren vorteilhaften Ausführungsform weist die Vorrichtung eine Sensoreinrichtung auf, um wenigstens einen für eine Erwärmung des Kunststoffvorformlings charakteristischen Parameter und/oder allgemein einen für den zu erwärmenden Kunststoffvorformling charakteristischen physikalischen Parameter zu erfassen. Im Stand der Technik ist der Abstand des Reflektorelements zu dem Kunststoffvorformling fest eingestellt bzw. weist einen fest eingestellten Wert auf. Dieser Wert wird bei einer mechanischen Kopplung entweder durch ein Garniturteil, etwa eine Ring- und Halterkombination für jeden Kunststoffvorformling oder jeder Sorte von Kunststoffvorformlingen erreicht oder aber es ist eine verstellbare Kopplung mit definierten Einstellwerten realisiert.

Wenn, wie hier beschrieben, ein eigener Antrieb für das Reflektorelement vorhanden ist, kann der Abstand zwischen dem Kunststoffvorformling und dem Reflektorelement variiert werden.

Bei einer weiteren vorteilhaften Ausführungsform weist die Vorrichtung eine Dreheinrichtung zum Drehen der Kunststoffvorformlinge um deren Längsachsen auf. Dies bedeutet, dass der Kunststoffvorformling während seiner Erwärmung auch bezüglich seiner Längsrichtung gedreht werden kann. Dabei ist es denkbar, dass eine Temperatur des Kunststoffvorformlings auch in Abhängigkeit von seiner Drehstellung erfasst werden kann. Auf diese Weise kann, falls gewünscht, auch ein Temperaturprofil des Kunststoffvorformlings in dessen Umfangsrichtung bestimmt werden.

Im Stand der Technik ist es denkbar, dass sich bei Veränderungen an dem Kunststoffvorformling (Materialzusammensetzung, Geometrie, Temperatur) auch die Absorptionseigenschaften ändern können. Somit wird bei einem fest definierten Abstand bzw. einer fest definierten Lage ein verändertes Temperaturprofil aufgebracht werden, welches nachfolgende Prozessschritte (insbesondere dem nachfolgenden Umformungs- bzw. Blasprozess) negativ beeinflussen kann.

Die Erfindung sieht daher vor, dass das Reflektorelement zur Beeinflussung des Feldes über einen anderen Antrieb bewegt werden kann, mit dem auch die Position im Prozess angepasst werden kann. Damit ist die Position des Reflektorelements nicht fest mit einer Sorte von Kunststoffvorformlingen verknüpft sondern kann während des Prozesses d. h. während eines Erwärmungsprozesses und/oder zwischen den Erwärmungsprozessen einzelner Kunststoffvorformlingen verändert werden.

Bei einer weiteren vorteilhaften Ausführungsform weist die Vorrichtung eine Sensoreinrichtung auf, um wenigstens einen für eine Erwärmung des Kunststoffvorformlings charakteristischen Parameter zu erfassen. Bei dieser Ausgestaltung wird, wie unten genauer erläutert, vorgeschlagen, dass eine Positionsänderung- oder anpassung des Reflektorelements auch in Abhängigkeit von entsprechenden charakteristischen und ermittelten Werten des Kunststoffvorformlings vorgenommen wird. Erfindungsgemäß handelt es sich bei der besagten Sensoreinrichtung um eine Temperaturmesseinrichtung, welche eine Temperatur der Kunststoffvorformlinge - bevorzugt berührungslos - erfasst. Damit ist es möglich, mit einer entsprechenden Sensorik Steuer- und Regelwerte zur Veränderung der Position des Reflektorelements gegenüber dem Kunststoffvorformling zu verwenden. Alternativ oder zusätzlich zu einem Temperatursensor kann auch ein Leistungssensor vorgesehen sein.

Bei einer weiteren vorteilhaften Ausführungsform weist die Vorrichtung eine Steuerungseinrichtung zum Steuern der Antriebseinrichtung auf und diese Steuerungseinrichtung ist dazu geeignet und bestimmt, die Bewegung des Reflektorelements in Abhängigkeit von wenigstens einem für eine Erwärmung der Kunststoffvorformlinge charakteristischen Wert zu steuern. Es wird damit vorgeschlagen, dass der Abstand zwischen dem Reflektorelement und dem Kunststoffvorformling insbesondere während der Erwärmung auch mit dem besagten Parameter, etwa der Temperatur des Kunststoffvorformlings in Beziehung gebracht und entsprechend gesteuert wird.

Wie erwähnt, erfolgt bevorzugt eine Anpassung eines Abstandes zwischen dem Reflektorelement und dem Kunststoffvorformling während einer Erwärmung des Kunststoffvorformlings. Daneben wäre es jedoch auch möglich, dass die Steuerungseinrichtung eine Einführbewegung des Kunststoffvorformlings bzw. allgemein die Bewegung des Kunststoffvorformlings in seiner Längsrichtung während der Erwärmung steuert.

Bevorzugt handelt es sich bei der Steuerungseinrichtung um eine Regelungseinrichtung. Dabei ist bevorzugt die Temperatur eine Eingangsgröße und der Abstand zwischen dem Reflektorelement und dem Kunststoffvorformling eine Ausgangsgröße bzw. eine Regelgröße.

Bei einer weiteren vorteilhaften Ausführungsform weist das Reflektorelement einen kreisförmigen und/oder ringförmigen Querschnitt auf. Bevorzugt ist dabei eine Ebene dieses Kreises oder Rings senkrecht zu der Längsrichtung des Kunststoffvorformlings. Bevorzugt weist das Reflektorelement eine rotationssymmetrischen Querschnitt auf. Bei einer weiteren bevorzugten Ausführungsform ist die Reflektoreinrichtung aus einem Metall hergestellt. Besonders bevorzugt handelt es sich bei der Reflektoreinrichtung um einen Metallring.

Dabei ist es möglich, dass diese Refloktoreinrichtung an einem (insbesondere nicht metallischen) Träger angeordnet ist.

Bei einer weiteren vorteilhaften Ausführungsform weist die Vorrichtung eine Transporteinrichtung auf, welche die Resornatoreinrichtung entlang eines vorgegebenen Transportpfads transportiert. Dabei kann diese Transporteinrichtung bevorzugt einen Träger aufweisen, an dem eine Vielzahl von Resornatoreinrichtungen angeordnet ist. Besonders bevorzugt kann es sich hierbei um einen drehbaren Träger handeln.

Die vorliegende Erfindung ist weiterhin auf ein Verfahren zum Erwärmen von Kunststoffvorformlingen gerichtet, wobei zu erwärmende Kunststoffvorformlinge in einen Aufnahmeraum einer Resornatoreinrichtung eingeführt werden und in diesem Aufnahmeraum wenigstens zeitweise zu ihrer Erwärmung mit Mikrowellen beaufschlagt werden und wobei mittels wenigstens eines teilweise innerhalb des Aufnahmeraums angeordneten Reflektorelements Mikrowellen auf einen vorgegebenen Abschnitt des Kunststoffvorformlings reflektiert werden.

Erfindungsgemäß wird wenigstens zeitweise eine geometrische Position des Reflektorelements gegenüber dem Aufnahmeraum verändert.

Es wird daher auch verfahrensseitig vorgeschlagen, dass eine Relativposition zwischen dem Reflektorelement und dem Aufnahmeraum und insbesondere auch zwischen dem Reflektorelement und dem Kunststoffvorformling wenigstens zeitweise verändert wird. Dabei ist es möglich, dass diese Relativposition während eines Erwärmungsvorgangs verändert wird, es wäre doch auch möglich, dass die Veränderung nach einem erfolgten Erwärmungsvorgang vorgenommen wird.

Bei einem weiteren vorteilhaften Verfahren wird ein für den Kunststoffvorformling und/oder für eine physikalische Eigenschaft des Kunststoffvorformlings charakteristischer Wert bestimmt und die geometrische Position des Reflektorelements wird auch in Abhängigkeit von diesem Wert gesteuert und/oder geregelt. Bevorzugt handelt es sich bei der physikalischen Eigenschaft um eine Temperatur des Kunststoffvorformlings. Dabei ist es vorteilhaft möglich, dass diese Temperatur des Kunststoffvorformlings berührungslos erfasst wird.

Bevorzugt wird die physikalische Eigenschaft mehrfach und/oder kontinuierlich bestimmt. Besonders bevorzugt wird dabei diese physikalische Eigenschaft, wie etwa eine Temperatur auch in Abhängigkeit von einer weiteren Größe, wie etwa der Längsrichtung des zu erwärmenden Kunststoffvorformlings bestimmt. Auf diese Weise kann ein Profil dieser Größe, beispielsweise ein Temperaturprofil aufgenommen werden.

Daneben kann jedoch die physikalische Eigenschaft auch in Abhängigkeit von anderen Parametern, wie etwa einem Querschnitt der Kunststoffvorformlinge aufgenommen werden und/oder in Abhängigkeit von einer Position des Kunststoffvorformlings gegenüber der Resonatoreinrichtung. Bei einer weiteren vorteilhaften Ausführungsform wird wenigstens ein Messwert (der für die physikalische Eigenschaft charakteristisch ist) oder eine Vielzahl von Messwerten gespeichert. Vorteilhaft weist die oben erwähnte Vorrichtung entsprechend eine Speichereinrichtung auf, welche zum Speichern von Messwerten, welche für die physikalische Eigenschaft charakteristisch sind, beispielsweise Temperaturwerten, vorgesehen ist. Bevorzugt kann eine Steuereinrichtung diese gespeicherten Werte zum Steuern der Antriebseinrichtung auslesen. Daneben wäre es auch möglich dass derartige Messwerte in Abhängigkeit von einem Abstand zwischen dem Reflektorelement und dem Kunststoffvorformling aufgenommen werden, allgemein in Abhängigkeit von einer Position des Reflektorelements in dem Aufnahmeraum.

Bei einer bevorzugten Variante wird im Prozess der Abstand zwischen dem Reflektorelement und dem Kunststoffvorformling abhängig von einer Temperatur des Kunststoffvorformlings und/oder abhängig von einer aktuellen Leistungsaufnahme und/oder abhängig von einer Feldstärke in der Resornatoreinrichtung eingestellt. Auf diese Weist kann die Variabilität, der Wirkungsgrad und die Stabilität des Prozesses erhöht werden.

Bei einem weiteren bevorzugten Verfahren wird ein definiertes Temperaturprofil an einen vorgegebenen Bereich des Kunststoffvorformlings, insbesondere aber nicht ausschließlich einen Kuppenbereich des Kunststoffvorformlings aufgetragen, welches bevorzugt im Vergleich zu einem gleichbleibenden Abstand zwischen dem Reflektorelement und dem Kunststoffvorformling mehr Variabilität aufweist.

Diese Variabilität ermöglicht verbesserte Erwärmungsergebnisse hinsichtlich Gleichmäßigkeit der Durcherwärmung oder aber auch, falls gewünscht, eine definierte Profilierung und damit eine bessere Ausnutzung der Materialmengen im Kuppenbereich des Kunststoffvorformlings.

Durch die erfindungsgemäß beschriebene zusätzliche Variabilität des Reflektorelements kann der Wirkungsgrad des Applikators bzw. der Resornatoreinrichtung verbessert werden, in dem die Leistungsaufnahme durch den Abstand des Metallrings bzw. des Reflektorelements optimiert und geregelt wird. Daneben ist es auch möglich, dass die Stabilität des Prozesses verbessert wird, in dem die Feldstärke in der Resornatoreinrichtung bzw. im Applikator durch die Regelung des Abstands konstant gehalten wird und auf diese Weise bevorzugt plasmafähige Feldstärken vermieden werden.

Es wäre jedoch auch möglich, dass eine Anpassung der Position des Reflektorelements zwischen den Erwärmungen unterschiedlicher Kunststoffvorformlinge erfolgt. Dabei ist es denkbar, dass die Verteilung des Energieeintrags d. h. die Erwärmung des Kunststoffvorformlings mit einer geeigneten Sensoreinrichtung während bzw. nach dem Erwärmprozess aufgezeichnet wird.

Durch einen Vergleich von Ist- und Sollprofilierungen werden bevorzugt Abweichungen detektiert und durch Änderungen von Prozessparametern und insbesondere auch durch Änderungen eines Abstands zwischen dem Reflektorelement und dem Kunststoffvorformling für den nächsten Kunststoffvorformling (d.h. den nächsten Erwärmungsvorgang) ausgeglichen.

Bevorzugt wird daher wenigstens ein durch Messung ermittelter Wert mit wenigstens einem weiteren - insbesondere gespeicherten - Wert verglichen.

Dabei ist es denkbar, dass diese Prozessparameter korreliert mit Energieeintragswerten sind, d. h. es können Aufheizzeiten, Energiemengen oder Temperaturwerte für Teilbereiche des Erwärmungsprozesses definiert werden.

Zusätzlich wird im Rahmen der Erfindung auch der Abstand des Reflektorelements zu den Kunststoffvorformlingen in diese Regelung aufgenommen. Auf diese Weise werden nicht nur die Energiemengen sondern auch deren Verteilung angepasst.

Durch die Verschiebung des Profils, insbesondere an dem Kuppenbereich des Kunststoffvorformlings werden die (nachfolgenden) Erwärmschritte bis zu einem Halsbereich verschoben aufgetragen. Bevorzugt wird auch eine Anpassung anderer Prozessparameter, wie beispielsweise der Aufheizzeiten, der Energiemengen und der Temperaturwerte für Teilbereiche vorgenommen. Auf diese Weise kann ein Solltemperaturprofil über den ganzen Kunststoffvorformling definiert aufgetragen werden. Auf diese Weise ist es auch denkbar, dass auf Änderungen an dem Kunststoffvorformling reagiert wird, welche durch ein alleiniges Anpassen der Energiemengen in den einzelnen Bereichen der Kunststoffvorformlinge nicht ausgeglichen werden könnten.

Bei einem weiteren vorteilhaften Verfahren wird durch eine Positionierung des Reflektorelements und/oder eine Veränderung dieser Positionierung ein Temperaturprofil auf den Kunststoffvorformling aufgebracht. So kann beispielsweise ein derartiges Temperaturprofil in einer Umfangsrichtung und/oder in der Längsrichtung der Kunstvorformlinge aufgebracht werden.

Bei einem weiteren vorteilhaften Verfahren wird eine geometrische Position des Reflektorelements gegenüber dem Aufnahmeraum während eines Erwärmungsprozesses verändert. Auf diese Weise kann die Erwärmung der einzelnen Kunststoffvorformlinge schnell und individuell angepasst werden.

Weitere Vorteile und Ausführungsformen ergeben sich aus den beigefügten Zeichnungen:
Darin zeigen:
- Fig. 1: eine schematische Darstellung einer Vorrichtung nach dem Stand der Technik;
- Fig. 2: eine Darstellung einer erfindungsgemäßen Vorrichtung;
- Fig. 3: eine Darstellung eines Zusammenhangs zwischen einer Temperatur und einem Abstand des Reflektorelements von dem Kunststoffvorformling;
- Fig. 4a: eine erste Darstellung zur Veranschaulichung einer Erwärmung eines Kunststoffvorformlings;
- Fig. 4b: eine zweite Darstellung zur Veranschaulichung der Erwärmung eines Kunststoffvorformlings.

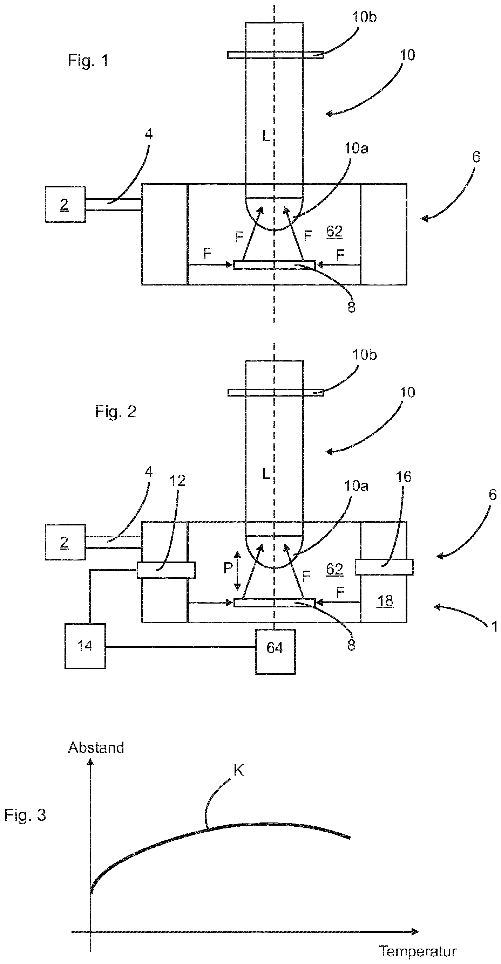

Figur 1 zeigt eine schematische Darstellung eines Erwärmungsvorgangs für einen Kunststoffvorformling 10. Dieser Kunststoffvorformling 10 weist dabei einen Tragring 10b auf sowie einen Kuppenbereich 10a. Das Bezugszeichen 6 kennzeichnet in seiner Gesamtheit eine Resonatoreinrichtung, in welche der Kunststoffvorformling 10 entlang seiner Längsrichtung L eingeschoben wird. Das Bezugszeichen 62 kennzeichnet entsprechend einen Aufnahmeraum, der zur Aufnahme des Kunststoffvorformlings 10 dient. Innerhalb dieses Aufnahmeraums ist ein Reflektorelement 8 angeordnet, beispielsweise der oben erwähnte Metallring.

Eine Mikrowellenerzeugungseinrichtung 2 wie beispielsweise ein Magnetron erzeugt Mikrowellen, welche über eine Zuführungseinrichtung 4 wie einen Hohlleiter zu der Resonatoreinrichtung 6 gelangen. Eine Verstellung des Reflektorelements 8 gegenüber dem Kunststoffvorformling oder gegenüber dem Aufnahmeraum 62 ist bei dem in Figur 1 gezeigtem Stand der Technik nicht vorgesehen. Die Pfeile F kennzeichnen grob schematisch das Mikrowellenfeld, welches zur Erwärmung der Kunststoffvorformlinge 10 dient.

Figur 2 zeigt eine schematische Darstellung einer erfindungsgemäßen Vorrichtung 1. Bei dieser Vorrichtung 1 ist nunmehr eine Antriebseinrichtung 64 vorgesehen, mittels derer das Reflektorelement 8 hier ebenfalls in der Längsrichtung L bewegt werden kann und damit näher auf den Kunststoffvorformlings zugestellt oder weiter von dem Kunststoffvorformling 10 entfernt werden kann. Bei dieser Antriebseinrichtung 64 kann es sich beispielsweise um einen Linearmotor halten.

Das Bezugszeichen 12 kennzeichnet eine erste Sensoreinrichtung, welche einen für den Kunststoffvorformling charakteristischen Parameter die insbesondere eine Temperatur misst. Bei dieser Sensoreinrichtung kann es sich beispielsweise um ein Pyrometer handeln. Eine Steuerungseinrichtung 14 steuert die Antriebseinrichtung 64 und damit auch die Bewegung der Reflektorelements 8 entlang des Doppelpfeils P.

Daneben kann auch eine Leistungsmesseinrichtung 16 vorgesehen sein, welche eine Mikrowellenleistung im Inneren der Resonatoreinrichtung 6 bzw. in dem Aufnahmeraum 62 misst.

Das Bezugszeichen 18 kennzeichnet eine umlaufende Wandung der Resonatoreinrichtung 6. Diese läuft insbesondere um die Längsachse L des Kunststoffvorformlings 10 um. Die von dieser Wandung ausgehenden und auf das Reflektorelement gerichteten Pfeile F veranschaulichen wieder die Mikrowellen, welche von dem Reflektorelement in Richtung des Kunststoffvorformlings 10 genauer gesagt dessen Kuppenbereich 10a reflektiert werden.

Figur 3 zeigt einen Zusammenhang (Kurve K) zwischen einer Temperatur des Kunststoffvorformlings 10 und einem Abstand zwischen dem Kunststoffvorformling 10 und dem Reflektorelement 8. Auch anhand derartiger Messergebenisse ist es möglich, dass die Stabilität des gesamten Erwärmungsprozesses verbessert wird, indem die Feldstärke in der Resonatoreinrichtung 6 durch eine Regelung des Abstands konstant gehalten wird, um, wie oben erwähnt, plasmafähige Feldstärken zu verhindern.

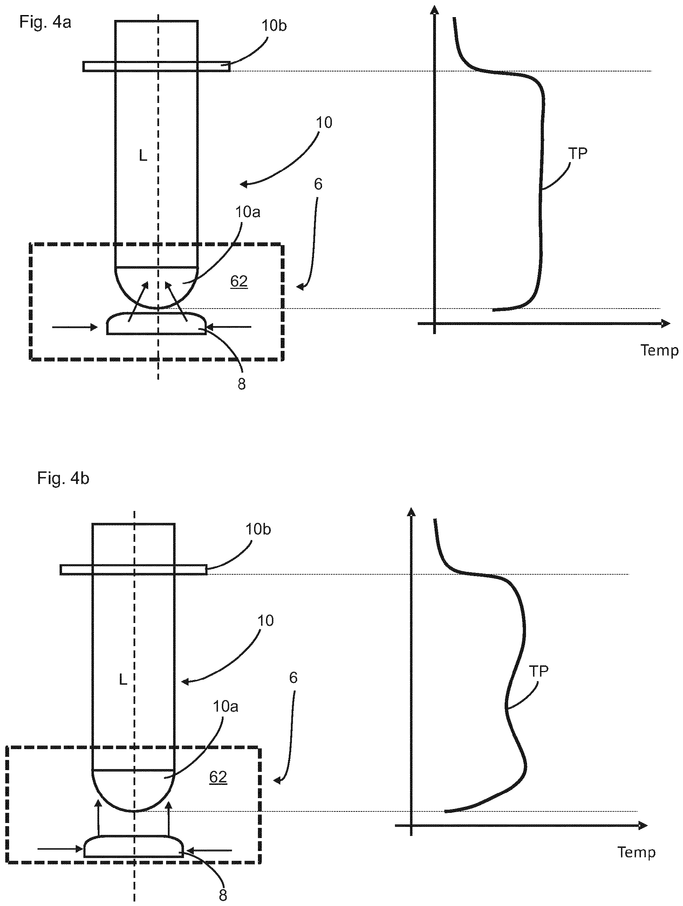

Die Figuren 4a und 4b veranschaulichen wiederrum die Regelung der Position des Reflektorelements 8 (bezüglich des Aufnahmeraums und/oder dem Kunststoffvorformling), wobei hier jedoch die Antriebseinrichtung nicht dargestellt ist. Wie erwähnt, besteht eine Idee der Erfindung darin, dass auch der Abstand des Reflektorelements 8 zu dem Kunststoffvorformling in die Regelung aufgenommen wird. Bei dieser Ausgestaltung wird zunächst in einer bestimmten in Figur 4b gezeigten Position des Reflektorelements 8 die Erwärmung des Kunststoffvorformlings 10 gemessen. Insbesondere wird daher ein auf die Längsrichtung L des Kunststoffvorformlings 10 bezogenes Temperaturprofil TP aufgenommen.

Falls sich nun ergibt, dass die Temperaturverteilung angepasst werden sollte wird, wie im oberen Teilbild (Figur 4a) gezeigt das Reflektorelement nach oben angehoben und damit der Abstand zu dem Kunststoffvorformlings 10 bzw. dessen Kuppe 10a verringert. Anschließend wird nach dem Erwärmungsprozess wieder die Temperatur gemessen. Man erkennt, dass bei der in Figur 4b gezeigten Darstellung wenig Mikrowellenleistung in den Kuppenbereich gelangt und daher der Kuppenbereich nur schwach erwärmt wird. Bei der in Figur 4a gezeigte erste Darstellung, bei der das Reflektorelement 8 näher an dem Kunststoffvorformlings 10 angeordnet ist ergibt sich damit eine günstigere Temperaturverteilung, (siehe jeweils das rechte Teilbild). Durch die variable Verstellung des Reflektorelements kann demnach der Energieeintrag in den Preform beeinfluss werden. Insbesondere kann durch die variable Verstellung des Reflektorelements ein Temperaturprofil auf den Preform aufgebracht werden.

### Bezugszeichenliste

- 1: Vorrichtung
- 2: Mikrowellenerzeugungseinrichtung
- 4: Zuführungseinrichtung, Hohlleiter
- 6: Resonatoreinrichtung
- 8: Reflektorelement
- 10: Kunststoffvorformling
- 10a: Kuppenbereich
- 10b: Tragring
- 12: Sensoreinrichtung
- 14: Steuerungseinrichtung
- 16: Leistungsmesseinrichtung
- 18: umlaufende Wandung der Resonatoreinrichtung
- 62: Aufnahmeraum der Resonatoreinrichtung
- 64: Antriebseinrichtung
- L: Längsrichtung
- K: Kurve
- P: Doppelpfeil (Bewegung des Reflektorelements
- TP: Temperaturprofil
- F: Mikrowellenfeld

## Patentansprüche

1. Vorrichtung (1) zum Erwärmen von Kunststoffvorformlingen (10) mit einer Mikrowellenerzeugungseinrichtung (2), welche Mikrowellen erzeugt und mit einer Resonatoreinrichtung (6), welche einen Aufnahmeraum (62) ausbildet in welchen die Kunststoffvorformlinge (10) einführbar sind, um in der Resonatoreinrichtung (6) zu ihrer Erwärmung mit den Mikrowellen beaufschlagt zu werden, wobei die Vorrichtung (1) ein wenigstens teilweise in dem Aufnahmeraum (62) angeordnetes Reflektorelement (8) aufweist, welches dazu geeignet und bestimmt ist, Mikrowellen in Richtung eines Bodenbereichs (10a) der Kunststoffvorformlinge (10) zu leiten, wobei das Reflektorelement (8) gegenüber dem Aufnahmeraum (62) beweglich ist, und die Vorrichtung (1) eine Antriebseinrichtung (64) aufweist, um das Reflektorelement (8) gegenüber dem Aufnahmeraum (62) zu bewegen und wobei die Vorrichtung (1) eine Steuerungseinrichtung (14) zum Steuern der Antriebseinrichtung (64) aufweist wobei ein Abstand zwischen dem Kunststoffvorformling und dem Reflektorelement in einer Längsrichtung des Kunststoffvorformlings veränderbar ist, **dadurch gekennzeichnet, dass** diese Steuerungseinrichtung (14) dazu geeignet und bestimmt ist, die Bewegung des Reflektorelements (8) in Abhängigkeit von wenigstens einem für eine Erwärmung der Kunststoffvorformlinge (10) charakteristischen Wert zu steuern, wobei die Vorrichtung (1) eine Sensoreinrichtung (12) aufweist, um wenigstens einen für eine Erwärmung des Kunststoffvorformlings (10) charakteristischen Parameter zu erfassen und wobei die Sensoreinrichtung (12) eine Temperaturmesseinrichtung (12) ist, welche eine Temperatur der Kunststoffvorformlinge (10) - bevorzugt berührungslos - erfasst.

2. Vorrichtung (1) nach Anspruch 1
**dadurch gekennzeichnet, dass**
das Reflektorelement (8) einen ringförmigen Querschnitt aufweist.

3. Vorrichtung (1) nach wenigstens einem der vorangegangenen Ansprüche, **dadurch gekennzeichnet, dass**
die Vorrichtung eine Transporteinrichtung aufweist, welche die Resonatoreinrichtung (6) entlang eines vorgegebenen Transportpfads transportiert.

4. Verfahren zum Erwärmen von Kunststoffvorformlingen (10), mittels einer Vorrichtung gemäß Anspruch 1, wobei der zu erwärmende Kunststoffvorformlinge (10) in den Aufnahmeraum (62) der Resonatoreinrichtung (6) eingeführt wird und in diesem Aufnahmeraum (62) wenigstens zeitweise zu ihrer Erwärmung mit den Mikrowellen beaufschlagt wird und wobei mittels des wenigstens teilweise innerhalb des Aufnahmeraums (62) angeordneten Reflektorelements (8) Mikrowellen auf einen vorgegebenen Abschnitt der Kunststoffvorformlinge (10) reflektiert werden,
wobei die geometrische Position des Reflektorelements (8) gegenüber dem Aufnahmeraum (62) wenigstens zeitweise verändert wird, wobei der Abstand zwischen dem Kunststoffvorformling (10) und dem Reflektorelement (8) in der Längsrichtung (L) des Kunststoffvorformlings (10) verändert wird,
**dadurch gekennzeichnet, dass** wenigstens ein für den Kunststoffvorformling (10) und/oder für eine physikalische Eigenschaft des Kunststoffvorformlings (10) charakteristischer Wert bestimmt wird und wobei.
die Sensoreinrichtung (12) die Temperaturmesseinrichtung (12) ist, welche eine Temperatur der Kunststoffvorformlinge (10) - bevorzugt berührungslos - erfasst.

5. Verfahren nach Anspruch 4,
**dadurch gekennzeichnet, dass**
die geometrische Position des Reflektorelements (8) auch in Abhängigkeit von diesem Wert gesteuert wird.

6. Verfahren nach wenigstens einem der vorangegangenen Ansprüche,
**dadurch gekennzeichnet, dass**
wenigstens ein für den Kunststoffvorformling (10) und/oder für eine physikalische Eigenschaft des Kunststoffvorformlings (10) charakteristischer Wert in Abhängigkeit von einer geometrischen Größe des Kunststoffvorformlings (10) und/oder in zeitlicher Abhängigkeit bestimmt wird.

7. Verfahren nach wenigstens einem der vorangegangenen Ansprüche,
**dadurch gekennzeichnet, dass**
durch eine Positionierung des Reflektorelements (8) ein Temperaturprofil auf den Kunststoffvorformling aufgebracht wird.

8. Verfahren nach wenigstens einem der vorangegangenen Ansprüche,
**dadurch gekennzeichnet, dass**
eine geometrische Position des Reflektorelements (8) gegenüber dem Aufnahmeraum (62) während eines Erwärmungsprozesses verändert wird.

## Claims

1. Apparatus (1) for heating plastic preforms (10), having a microwave generating device (2) which generates microwaves, and having a resonator device (6) which forms a receiving space (62) into which the plastic preforms (10) can be introduced so as to be acted upon by the microwaves in the resonator device (6) in order to be heated, wherein the apparatus (1) has a reflector element (8) which is arranged at least partially in the receiving space (62) and which is suitable and intended for conducting microwaves in the direction of a base region (10a) of the plastic preforms (10), wherein the reflector element (8) is movable relative to the receiving space (62) and the apparatus (1) has a drive device (64) for moving the reflector element (8) relative to the receiving space (62), and wherein the apparatus (1) has a control device (14) for controlling the drive device (64), wherein a distance between the plastic preform (10) and the reflector element (8) in a longitudinal direction (L) of the plastic preform (10) is variable,
**characterized in that**
this control device (14) is suitable and intended for controlling the movement of the reflector element (8) as a function of at least one value that is characteristic of a heating of the plastic preforms (10), wherein the apparatus (1) has a sensor device (12) for detecting at least one parameter that is characteristic of a heating of the plastic preform (10), and wherein the sensor device (12) is a temperature measuring device which detects, preferably in a contactless manner, a temperature of the plastic preforms (10).

2. Apparatus (1) according to claim 1,
**characterized in that**
the reflector element (8) has a ring-shaped cross-section.

3. Apparatus (1) according to at least one of the preceding claims, **characterized in that**
the apparatus has a transport device which transports the resonator device (6) along a predefined transport path.

4. Method for heating plastic preforms (10) by means of a apparatus according to claim 1, wherein plastic preforms (10) to be heated are introduced into a receiving space (62) of a resonator device (6) and are acted upon by microwaves at least at times in this receiving space (62) in order to be heated, and wherein microwaves are reflected onto a predefined section of the plastic preforms (10) by means of a reflector element (8) which is arranged at least partially within the receiving space (62), wherein the geometric position of the reflector element (8) relative to the receiving space (62) is varied at least at times, wherein the distance between the plastic preform (10) and the reflector element (8) in a longitudinal direction (L) of the plastic preform (10) is varied, **characterized in that**
at least one value that is characteristic of the plastic preform and/or of a physical property of the plastic preform (10) is determined and wherein the sensor device (12) is a temperature measuring device (12) which detects, preferably in a contactless manner, a temperature of the plastic preforms (10).

5. Method according to claim 4,
**characterized in that**
the geometric position of the reflector element (8) is also controlled as a function of this value.

6. Method according to at least one of the preceding claims, **characterized in that**
at least one value that is characteristic of the plastic preform (10) and/or of a physical property of the plastic preform (10) is determined as a function of a geometric size of the plastic preform (10) and/or as a function of time.

7. Method according to at least one of the preceding claims, **characterized in that**
a temperature profile is applied to the plastic preform by a positioning of the reflector element (8).

8. Method according to at least one of the preceding claims, **characterized in that**
a geometric position of the reflector element (8) relative to the receiving space (62) is varied during a heating process.

## Revendications

1. Dispositif (1) pour le chauffage de préformes en plastique (10) avec un système de génération de micro-ondes (2), lequel génère des micro-ondes et avec un système de résonateur (6), lequel réalise un espace de réception (62) dans lequel les préformes en plastique (10) peuvent être introduites, afin d'être sollicitées avec les micro-ondes dans le système de résonateur (6) pour leur chauffage, dans lequel le dispositif (1) présente un élément réflecteur (8) disposé au moins en partie dans l'espace de réception (62), lequel est adapté et destiné à guider des micro-ondes en direction d'une zone de fond (10a) des préformes en plastique (10), dans lequel l'élément réflecteur (8) est mobile par rapport à l'espace de réception (62), et le dispositif (1) présente un système d'entraînement (64), afin de déplacer l'élément réflecteur (8) par rapport à l'espace de réception (62) et dans lequel le dispositif (1) présente un système de commande (14) pour la commande du système d'entraînement (64), dans lequel un écart entre la préforme en plastique et l'élément réflecteur dans une direction longitudinale de la préforme en plastique peut être modifié,
**caractérisé en ce que**
ce système de commande (14) est adapté et conçu pour commander le déplacement de l'élément réflecteur (8) en fonction d'au moins une valeur caractéristique d'un chauffage des préformes en plastique (10), dans lequel le dispositif (1) présente un système de détection (12), afin de détecter au moins un paramètre caractéristique d'un chauffage de la préforme en plastique (10), et dans lequel le système de détection (12) est un système de mesure de température (12), lequel détecte une température des préformes en plastique (10) - de préférence sans contact.

2. Dispositif (1) selon la revendication 1,
**caractérisé en ce que**
l'élément réflecteur (8) présente une section transversale annulaire.

3. Dispositif (1) selon au moins l'une des revendications précédentes, **caractérisé en ce que**
le dispositif présente un système de transport, lequel transporte le système de résonateur (6) le long d'un chemin de transport prédéfini.

4. Procédé pour le chauffage de préformes en plastique (10) au moyen d'un dispositif selon la revendication 1, dans lequel les préformes en plastique (10) à chauffer sont introduites dans l'espace de réception (62) du système de résonateur (6) et dans cet espace de réception (62) sont sollicitées au moins par intermittence avec des micro-ondes pour leur chauffage et dans lequel les micro-ondes sont réfléchies sur une partie prédéfinie des préformes en plastique (10) au moyen d'un élément réflecteur (8) disposé au moins en partie à l'intérieur de l'espace de réception (62), dans lequel une position géométrique de l'élément réflecteur (8) par rapport à l'espace de réception (62) est modifiée au moins par intermittence, dans lequel un écart entre la préforme en plastique (10) et l'élément réflecteur (8) dans une direction longitudinale (L) de la préforme en plastique (10) est modifié,
**caractérisé en ce que**
au moins une valeur caractéristique de la préforme en plastique (10) et/ou d'une propriété physique de la préforme en plastique (10) est déterminée et dans lequel le système de détection (12) est un système de mesure de température (12), lequel détecte une température des préformes en plastique (10) - de préférence sans contact.

5. Procédé selon la revendication 4,
**caractérisé en ce que**
la position géométrique de l'élément réflecteur (8) est également commandée en fonction de cette valeur.

6. Procédé selon au moins l'une des revendications précédentes, **caractérisé en ce que**
au moins une valeur caractéristique de la préforme en plastique (10) et/ou d'une propriété physique de la préforme en plastique (10) est déterminée en fonction d'une grandeur géométrique de la préforme en plastique (10) et/ou en fonction du temps.

7. Procédé selon au moins l'une des revendications précédentes, **caractérisé en ce que**
un profil de températures est appliqué sur la préforme en plastique par un positionnement de l'élément réflecteur (8).

8. Procédé selon au moins l'une des revendications précédentes, **caractérisé en ce que**
une position géométrique de l'élément réflecteur (8) par rapport à l'espace de réception (62) est modifiée pendant un processus de chauffage.
